# EUROPEAN PATENT SPECIFICATION

(11) **EP 3 222 927 B1**
(45) Date of publication and mention of the grant of the patent: **18.03.2020**
(21) Application number: 15861507.0
(22) Date of filing: 16.11.2015
(51) Int. Cl.: F24F 1/20, F24F 11/62, F24F 11/61, F24F 11/32, F24F 11/56

(54) **OUTDOOR UNIT**
AUSSENEINHEIT
UNITÉ EXTÉRIEURE

(30) Priority: 19.11.2014 JP 2014234413
(43) Date of publication of application: 27.09.2017
(73) Proprietor: Toshiba Carrier Corporation, Kawasaki-shi, Kanagawa 212-8585 (JP)
(72) Inventor: YAMANE, Hiromasa, Fuji-shi Shizuoka 416-8521 (JP); MORIMOTO, Toshiyuki, Fuji-shi Shizuoka 416-8521 (JP)
(74) Representative: Gramm, Lins & Partner Patent- und Rechtsanwälte PartGmbB
(86) International application number: PCT/JP2015/082135
(87) International publication number: WO 2016/080353

(56) References cited:
- EP-A1- 2 667 110
- EP-A2- 2 253 894
- JP-A- H10 111 001
- JP-A- 2003 148 790
- JP-A- 2006 132 870
- JP-A- 2007 040 584
- JP-A- 2007 322 086
- JP-A- 2013 093 766
- JP-A- 2013 120 035

## Description

### Technical Field

Embodiments described herein relate generally to an outdoor unit for a refrigeration cycle apparatus such as an air conditioning apparatus.

### Background Art

There is a known setting-diagnosis system. In the system, a transmitter-receiver having a function of near-field communication (NFC) is provided in the outdoor unit of a refrigeration cycle apparatus such as an air conditioning apparatus. Contactless data communication is performed between the transmitter-receiver and an information terminal to set various types of data related to the operation of the outdoor unit and diagnose the state of the outdoor unit.

The administrator or serviceman of the air conditioning apparatus can perform the above setting or diagnosis by coming close to the outdoor unit of the air conditioning apparatus and holding an information terminal close to the transmitter-receiver of the outdoor unit.

### Citation List

### Patent Literature

Patent Literature 1
   JP 5197549 B
Patent Literature 2
   JP 2006132870 A which discloses an outdoor unit according to the preamble of claim 1,
Patent Literature 3
   JP 2077322086 A

### Summary of Invention

### Technical Problem

Since the above outdoor unit is provided outside, anyone can approach the outdoor unit as well as the administrator and serviceman. Thus, there is a possibility that a malicious third party approaches the outdoor unit and makes an unauthorized change to the preset data.

Embodiments described herein aim to provide an outdoor unit which can avoid an unauthorized change to the preset data and is excellent in security and reliability.

### Means for Solving Problem

According to Claim 1, an outdoor unit comprises a communication unit and a controller. The communication unit performs contactless data communication with an information terminal close to the outdoor unit. The controller permits data setting from the information terminal via the communication unit only for a certain period after the outdoor unit is turned on.

### Brief Description of Drawings

FIG. 1 shows an external appearance according to one embodiment.
FIG. 2 is a block diagram showing a control circuit according to the embodiment.
FIG. 3 is a flowchart showing the control of a controller according to the embodiment.

### Mode for Carrying Out the Invention

An embodiment will be explained below.

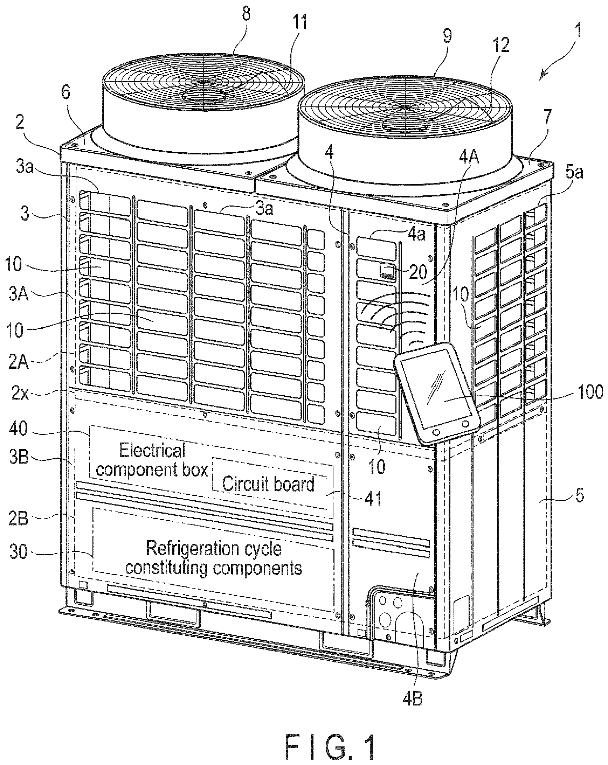

As shown in FIG. 1, the outline of an outdoor unit 1 is formed by a cubic housing 2. The housing 2 includes front plates 3 and 4, a right side plate 5, top plates 6 and 7, a left side plate, a rear plate, and a bottom plate. Front plates 3 and 4, the right side plate 5, the left side plate, the rear plate and the bottom plate are formed of metal, excluding top plates 6 and 7.

Front plate 3 is divided into an upper front plate 3A and a lower front plate 3B in a vertical direction. Each of upper and lower front plates 3A and 3B is removable. Upper front plate 3A comprises a large number of rectangular ventilation openings (inlets) 3a which are vertically and horizontally arranged. Front plate 4 is divided into an upper front plate 4A and a lower front plate 4B in a vertical direction in a manner similar to that of front plate 3. Each of upper and lower front plates 4A and 4B is removable. Upper front plate 4A comprises a large number of rectangular ventilation openings (inlets) 4a arranged in a vertical direction. The right side plate 5 comprises a large number of rectangular ventilation openings (inlets) 5a which are vertically and horizontally arranged. The left side plate comprises a large number of ventilation openings (inlets) which are vertically and horizontally arranged in a manner similar to that of the right side plate 5. Each of top plates 6 and 7 comprises a circular ventilation opening. Cylindrical fan housings 8 and 9 are formed so as to cover the ventilation openings of top plates 6 and 7, respectively.

The inside of the housing 2 is divided into an upper heat exchange chamber 2A and a lower machinery chamber 2B by an intermediate divider 2x. The heat exchange chamber 2A is closed by upper front plates 3A and 4A. The machinery chamber 2B is closed by lower front plates 3B and 4B.

An outdoor heat exchanger 10 and outdoor fans 11 and 12 are housed in the heat exchange chamber 2A. The outdoor heat exchanger 10 has a U-shape as seen in plan view. The outdoor heat exchanger 10 is placed on the intermediate divider 2x along the left side plate, upper front plates 3A and 4A and the right side plate 5 of the housing 2 such that the outdoor heat exchanger 10 is close to these plates. The internal space of the outdoor heat exchanger 10 communicates with fan housings 8 and 9 via the ventilation openings of top plates 6 and 7, respectively. Outdoor fans 11 and 12 are provided at positions corresponding to fan housings 8 and 9.

Refrigeration cycle constituting components 30 and an electrical component box 40 are housed in the machinery chamber 2B. The refrigeration cycle constituting components 30 collectively mean a compressor, a four-way valve, a receiver tank, an accumulator, etc. The electrical component box 40 houses a plurality of drive circuits which drive the compressor, outdoor fans 11 and 12, etc., and a circuit board 41. For example, the internal components of the machinery chamber 2B are exchanged or fixed by removing lower front plates 3B and 4B.

When outdoor fans 11 and 12 rotate, external air is drawn into the heat exchange chamber 2A through the ventilation openings of the left side plate, ventilation openings 3a and 4a of upper front plates 3B and 4B and ventilation openings 5a of the right side plate 5. The drawn air passes through the outdoor heat exchanger 10, and further goes through outdoor fans 11 and 12 and fan housings 8 and 9. Subsequently, the air is discharged to the outside of the housing 2. The air passing through the outdoor heat exchanger 10 exchanges heat with a refrigerant flowing through the outdoor heat exchanger 10.

A communication unit 20 is provided at a position corresponding to, of ventilation openings 4a of upper front plate 4A, for example, the second ventilation opening 4a from the top, between upper front plate 4A of the housing 2 and the outdoor heat exchanger 10. The height position of the second ventilation opening 4a from the top is substantially equivalent to the eye level of a worker standing next to the housing 2.

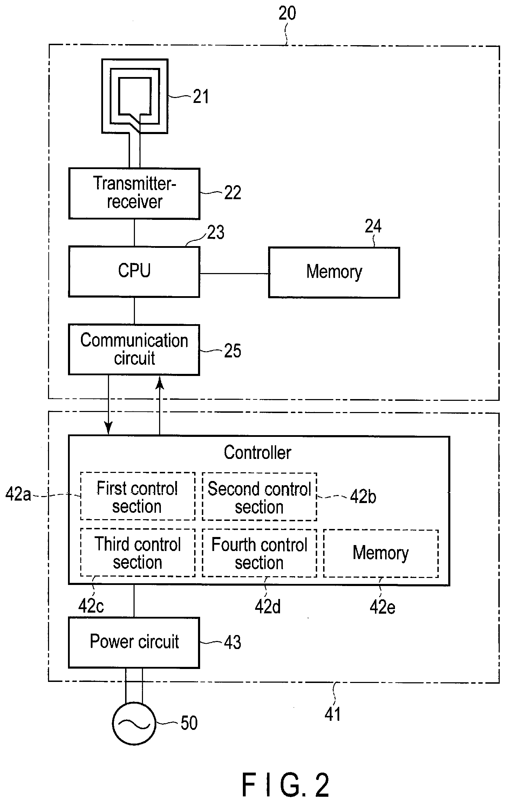

When an information terminal 100 is close to the communication unit 20 within a very short distance of each other, for example, within approximately 1 to 10 cm of each other, the communication unit 20 operates with the electricity generated by electromagnetic induction due to radio waves transmitted from the information terminal 100, and performs contactless data communication with the information terminal 100, using the near-field communication (NFC) technology. As shown in FIG. 2, the communication unit 20 includes an antenna 21, a transmitter-receiver 22, a CPU 23, a memory 24 and a communication circuit 25.

The antenna 21 transmits or receives radio waves to/from the nearby information terminal 100. The transmitter-receiver 22 transmits or receives a signal through the antenna 21, and loads the radio waves received in the antenna 21 as the operation power of the communication unit 20. The CPU 23 performs various processes for data communication. The memory 24 stores a program necessary to control the CPU 23, and temporarily stores received data and transmitted data. The communication circuit 25 performs data communication between the CPU 23 and a controller 42 via a signal line.

An outside air temperature sensor which detects outside air temperature is also housed in the communication unit 20.

The controller 42 controls the operation of the refrigeration cycle constituting components 30 and the drive circuits of the outdoor unit 1 in cooperation with an indoor unit included in the air conditioning apparatus as well as the outdoor unit 1. The controller 42 is provided on the circuit board 41 of the machinery chamber 2B as well as a power circuit 43. The power circuit 43 is connected to a commercial AC source 50 provided in a building via a supply cable, and loads the AC voltage of the commercial AC source 50 as the operation power of the outdoor unit 1.

The users, and the administrator and the serviceman of the air conditioning apparatus can easily enter the building in which the commercial AC source 50 is provided. However, the other people cannot enter the building. For example, the security of the building in which the commercial AC source 50 is provided is controlled. Only the registered users, and the administrator and serviceman of the air conditioning apparatus can enter the building. Thus, the operation for turning the commercial AC source 50 on and off can be performed by the users, and the administrator and serviceman of the air conditioning apparatus. However, this operation cannot be performed by the other people.

The controller 42 includes a first control section 42a, a second control section 42b, a third control section 42c, a fourth control section 42d and a memory 42e as main functions related to the data setting and diagnosis for the outdoor unit 1.

The first control section 42a permits data setting from the information terminal 100 via the communication unit 20 only for a certain period t1s after the outdoor unit 1 (the commercial AC source 50) is turned on. Specifically, the first control section 42a receives data input from the information terminal 100 via the communication unit 20 only for a certain period t1s after the outdoor unit 1 is turned on.

When the received data is data related to the operation of the outdoor unit 1, the second control section 42b performs a data setting process for setting the data as the operation data of the outdoor unit 1. The process for setting the operation data is completed by the update and storage in the memory 42e.

When the received data is an instruction for diagnosis for the outdoor unit 1, the third control section 42c performs a diagnosis process for diagnosing the state of the outdoor unit 1 and notifying the information terminal 100 of the diagnosis via the communication unit 20.

Near the end of the certain period t1s, the fourth control section 42d notifies the information terminal 100 of the fact via the communication unit 20. When the fourth control section 42d receives an instruction to extend the period from the information terminal 100 in response to the notification via the communication unit 20, the fourth control section 42d extends the certain period t1s.

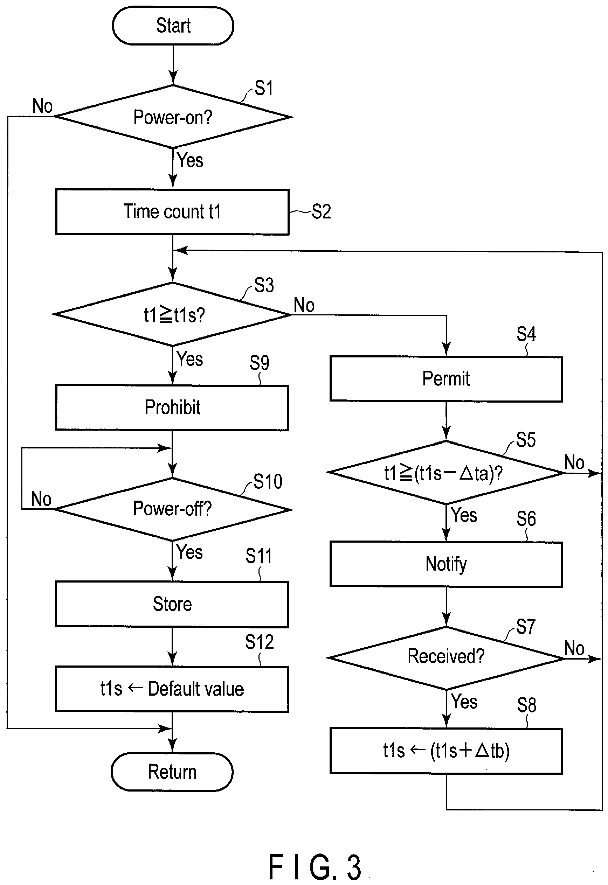

Now, this specification explains the control performed by the controller 42 with reference to the flowchart of FIG. 3.

When the outdoor unit 1 is installed or moved, or maintenance or inspection is performed for the trouble of the air conditioning apparatus, the administrator or serviceman of the air conditioning apparatus sets data related to the operation of the outdoor unit 1 or diagnoses the state of the outdoor unit 1. At this time, the administrator or serviceman of the air conditioning apparatus enters the building in which the commercial AC source 50 is provided, and turns the commercial AC source 50 on. The administrator or serviceman of the air conditioning apparatus is hereinafter referred to as a worker.

When the commercial AC source 50 is turned on (power-on; YES in step S1), the controller 42 starts a time count t1 from zero (step S2), and compares the time count t1 with a predetermined certain period (default value) t1s (step S3). The certain period t1s includes a sufficient time for a worker to perform operation necessary for the above data setting process and the diagnosis process, and is set to, for example, approximately five to eight hours.

When the time count t1 is less than the certain period t1s (NO in step S3), the controller 42 permits a data setting process and a diagnosis process based on data communication between the information terminal 100 and the communication unit 20 (step S4).

Based on this permission, the worker can perform operation necessary for a data setting process and operation necessary for a diagnosis process. The worker comes close to upper front plate 4A of the housing 2, and holds the information terminal 100 close to the second ventilation opening 4a of upper front plate 4A from the top. The worker operates the information terminal 100 close to the ventilation opening 4a and performs contactless data communication between the information terminal 100 and the communication unit 20. For the information terminal 100, for example, a tablet information terminal or a smartphone information terminal is used.

The controller 42 receives data input from the information terminal 100 via the communication unit 20. When the received data is data related to the operation of the outdoor unit 1, the controller 42 performs a data setting process for setting the received data as the operation data of the outdoor unit 1. When the received data is an instruction for diagnosis for the outdoor unit 1, the controller 42 performs a diagnosis process for diagnosing the state of the outdoor unit 1 and notifying the information terminal 100 of the diagnosis via the communication unit 20.

The operation data set by the above data setting process includes, for example, various parameters related to the operation of the outdoor unit 1 (for example, outside air temperature, refrigerant temperature, the operating frequency of the compressor, and the address codes of a plurality of indoor units), and a control program (for example, firmware) for controlling the operation of the outdoor unit 1. The state diagnosed by the above diagnosis process includes, for example, the operation history of the outdoor unit 1, and the details of failure of the outdoor unit 1.

The operation for a data setting process and the operation for a diagnosis process can be sufficiently completed within the certain period t1s if no problem occurs in the procedure of the operation, etc.

Based on the permission of step S4, the controller 42 determines whether or not the time count t1 has reached a predetermined period "t1s - Δta" less than the certain period t1s by period Δta (step S5). Period Δta is set to notify the worker that the time count t1 is close to the certain period t1s. Period Δta is, for example, approximately five minutes. When the time count t1 is less than the predetermined period "t1s-Δta" (NO in step S5), the controller 42 returns to step S3 and continues to compare the time count t1 with the certain period t1s.

When the time count t1 has reached the predetermined period "t1s - Δta" (YES in step S5), the controller 42 notifies the information terminal 100 that the end of the process permissible period approaches via the communication unit 20 (step S6). After the reception of the notification, the information terminal 100 notifies the worker that the end of the process permissible period is close by displaying an image or producing beep sound. After the reception of the notification, the worker determines whether or not the current operation can be completed by the end of the process permissible period.

When the worker determines that the current operation cannot be completed by the end of the operation permissible period, the worker instructs the controller 42 to extend the period from the information terminal 100 via the communication unit 20. When the controller 42 receives the instruction to extend the period (YES in step S7), the controller 42 adds period Δtb (> Δta) to the certain period t1s, and sets t1s + Δtb as a new certain period t1s (step S8). Period Δtb is, for example, one hour. The controller 42 returns to step S3 and continues to compare the time count t1 with the new certain period t1s.

When the worker determines that the current operation can be completed by the end of the operation permissible period, the worker continues the operation without issuing the above instruction to extend the period. In this case, the controller 42 does not receive an instruction to extend the period (NO in step S7). Thus, the controller 42 returns to step S3 and continues to compare the time count t1 with the certain period (default value) t1s without updating the certain period t1s.

When the time count t1 has reached the certain period t1s (YES in step S3), the controller 42 prohibits a data setting process based on data communication between the information terminal 100 and the communication unit 20 (step S9). A diagnosis process based on data communication between the information terminal 100 and the communication unit 20 may be continuously permitted, or may be prohibited in addition to a data setting process.

As described above, a data setting process is prohibited after the time count t1 has reached the certain period t1s. Thus, data cannot be set for the outdoor unit 1 even if a third party performs data communication with the communication unit 20 from his/her information terminal 100. In this way, it is possible to enhance the security and reliability for unauthorized access from a third party. Even if a third party tries to make an unauthorized change to the preset data of the outdoor unit 1, the change can be prevented.

In particular, the outdoor unit 1 is provided outside, and anyone can come close to the outdoor unit 1. Further, data communication using the NFC technology does not require a coupling process for establishing communication with the information terminal 100. Thus, it is important to enhance the security against unauthorized access from a third party as described above in terms of the safe operation and reliability of the air conditioning apparatus.

While the worker performs operation for a data setting process, the time count t1 may reach the certain period t1s, and the process may be prohibited. In this case, the worker should merely enter the building, turn the commercial AC source 50 off (power-off), and turn it on again (power-on).

Based on the prohibition of step S9, the controller 42 monitors the shutdown (power-off) of the commercial AC source 50 (YES in step S10). When the commercial AC source 50 is turned off (YES in step S10), the controller 42 stores, in the memory 42d, the processing content of the controller 42 immediately before the shutdown of the commercial AC source 50 (step S11), and sets the certain period ts1 to the default value (step S12). The controller 42 returns to step S1 and monitors power-on.

When the commercial AC source 50 is turned on again (power-on) (YES in step S1), the controller 42 repeats the process from step S2. In this case, the controller 42 continuously restarts the data setting process stopped by the above prohibition based on the processing content stored in the memory 42d. In this manner, the worker can complete the operation for the data setting process.

When data communication is performed between the information terminal 100 and the communication unit 20, the radio waves emitted from the information terminal 100 are not disturbed by magnetic upper front plate 4A and effectively reach the communication unit 20 through ventilation openings 4a. Similarly, the radio waves emitted from the communication unit 20 are not disturbed by magnetic upper front plate 4A and effectively reach the information terminal 100 through ventilation openings 4a.

The worker merely holds the information terminal 100 close to ventilation opening 4a and operates the information terminal 100. There is no need to remove upper front plate 4A and attach it again. Thus, no complicated work is required. In this way, the workload of the worker can be reduced, and the working time can be reduced.

Even when a large number of outdoor units 1 are provided, and their side plates are tightly adjacent to each other, the respective communication units 20 are provided on the front sides of the housings 2. Thus, data communication can be easily and steadily performed with the communication units 20 of all the outdoor units 1.

In the above embodiment, the communication unit 20 is provided at a position corresponding to the second ventilation opening 4a of upper front plate 4A from the top. However, the height position is not limited to this example, and can be appropriately determined. For example, in terms of security, the communication unit 20 may be provided at a position corresponding to a lower ventilation opening 4a as the internal side is difficult to see as a matter of course.

The above embodiment is explained, using the example in which the certain period t1s is set to approximately five to eight hours. However, the certain period t1s may be appropriately determined based on the type and the number of outdoor units 1, and the experience or skill of the worker.

In the above embodiment, a data setting process is prohibited at the end of the certain period t1s after the power-on. However, when the operation state or history of the outdoor unit 1 should not be seen by third parties, a process for reading data which should not be seen by third parties can be prohibited at the end of the certain period t1s after the power-on in addition to the prohibition of the data setting process.

The above embodiment is explained, using the example of an outdoor unit for an air conditioning apparatus as an outdoor unit for a refrigeration cycle apparatus. However, the embodiment is not limited to an outdoor unit for an air conditioning apparatus. The embodiment may be applied to, for example, an air-cooled chilling unit, a heat source unit for a heat-pump water heater, a heat source unit for a heat-pump warming apparatus, and a refrigerator connected to a refrigerated showcase.

The above embodiment and modification examples have been presented by way of example only, and are not intended to limit the scope of the invention. Indeed, the novel embodiment and modification examples described herein may be embodied in a variety of other forms; furthermore, various omissions, substitutions and changes in the form of the embodiment described herein may be made without departing from the spirit of the invention. The accompanying claims cover such forms or modifications falling within the scope of the invention.

### Reference Signs List

- 1: Outdoor unit
- 2: Housing
- 3: Front plate
- 3a: Ventilation opening
- 4: Front plate
- 4a: Ventilation opening
- 5: Right side plate
- 5a: Ventilation opening
- 6 and 7: Top plates
- 8 and 9: Fan housings
- 10: Outdoor heat exchanger
- 11 and 12: Outdoor fans
- 20: Communication unit
- 42: Controller
- 42a: First control section
- 42b: Second control section
- 42c: Third control section
- 42e: Memory
- 50: Commercial AC source
- 100: Information terminal

## Claims

1. Currently amended) An outdoor unit (1) comprising:
a communication unit (20) which is configured to perform contactless data communication with an information terminal (100) close to the outdoor unit (1); and
a controller (42) which permits data setting from the information terminal (100) via the communication unit (20) only for a certain period after the outdoor unit (1) is turned on **characterized in that** the communication unit (20) operates with electricity generated by electromagnetic induction due to a radio wave emitted from the information terminal (100), and is configured to perform contactless data communication by near-field communication technology with the information terminal (110).

2. Currently amended) The outdoor unit (1) of Claim 1, **characterized by** further comprising:
an outdoor heat exchanger (10); and
a housing (2) which houses the outdoor heat exchanger (10) and comprises a front plate (4) which includes a ventilation opening (4a) for supplying outside air to the outdoor heat exchanger (10) wherein
the communication unit (20) is provided at a position corresponding to the ventilation opening (4a) in the outdoor heat exchanger (10).

3. Currently amended) The outdoor unit (1) of Claim 1, **characterized in that**
the controller (42) is configured to receive data input from the information terminal (100) via the communication unit (20) for the certain period after the outdoor unit (1) is turned on, and
when the received data is data related to operation of the outdoor unit (10), the controller (42) sets the data as operation data of the outdoor unit (1).

4. Currently amended) The outdoor unit (1) of Claim 3, **characterized in that**
when the received data is an instruction for diagnosis for the outdoor unit (1), the controller (42) is configured to diagnose a state of the outdoor unit (1) and notifies the information terminal (100) of a diagnosis via the communication unit (20).

5. Currently amended) The outdoor unit (1) of Claim 1, **characterized in that**
near an end of the certain period, the controller (42) is configured to notify the information terminal (100) that the end of the certain period approaches via the communication unit (20), and
when the controller (42) receives an instruction to extend the period from the information terminal (100) via the communication unit (20) in response to the notification, the controller (42) extends the certain period.

## Patentansprüche

1. Außeneinheit (1) mit:
einer Kommunikationseinheit (20), die dazu eingerichtet ist, eine kontaktlose Datenkommunikation mit einem Informationsterminal (100) in der Nähe der Außeneinheit (1) durchzuführen; und
einer Steuereinheit (42), die eine Dateneinstellung von dem Informationsterminal (100) mittels der Kommunikationseinheit (20) nur für eine bestimmte Zeitspanne nach dem Einschalten der Außeneinheit (1) erlaubt, **dadurch gekennzeichnet, dass** die Kommunikationseinheit (20) mit Elektrizität arbeitet, die durch elektromagnetische Induktion aufgrund einer von dem Informationsterminal (100) ausgesandten Radiowelle erzeugt wird, und die Kommunikationseinheit (20) dazu eingerichtet ist, die kontaktlose Datenkommunikation durch eine Nahfeld-Kommunikationstechnologie mit dem Informationsterminal (100) durchzuführen.

2. Außeneinheit (1) nach Anspruch 1, **dadurch gekennzeichnet, dass** sie ferner aufweist:
einen Außenwärmetauscher (10); und
ein Gehäuse (2), das den Außenwärmetauscher (10) aufnimmt und eine Frontplatte (4) aufweist, die eine Lüftungsöffnung (4a) zur Zuführung von Außenluft zu dem Außenwärmetauscher (10) aufweist, wobei
die Kommunikationseinheit (20) an einer Stelle angeordnet ist, die der Lüftungsöffnung (4a) in dem Außenwärmetauscher (10) entspricht.

3. Außeneinheit (1) nach Anspruch 1, **dadurch gekennzeichnet, dass**
die Steuereinheit (42) dazu eingerichtet ist, Daten von dem Informationsterminal (100) mittels der Kommunikationseinheit (20) für die bestimmte Zeitspanne nach dem Einschalten der Außeneinheit (1) zu empfangen, und
wenn es sich bei den empfangenen Daten um Daten handelt, die sich auf den Betrieb der Außeneinheit (1) beziehen, die Steuereinheit (42) die Daten als Betriebsdaten der Außeneinheit (1) setzt.

4. Außeneinheit nach Anspruch 3, **dadurch gekennzeichnet, dass** wenn die empfangenen Daten eine Anweisung zur Diagnose für die Außeneinheit (1) sind, die Steuereinheit (42) dazu eingerichtet ist, einen Zustand der Außeneinheit (1) zu diagnostizieren und dem Informationsterminal (100) eine Diagnose mittels der Kommunikationseinheit (20) zu melden.

5. Außeneinheit (1) nach Anspruch 1, **dadurch gekennzeichnet, dass**
kurz vor dem Ende der bestimmten Zeitspanne, die Steuereinheit (42) dazu eingerichtet ist, dem Informationsterminal (100) mittels der Kommunikationseinheit (20) zu melden, dass das Ende der bestimmten Zeitspanne näher rückt, und
wenn die Steuereinheit (42) als Reaktion auf die Meldung von dem Informationsterminal (100) mittels der Kommunikationseinheit (20) eine Anweisung zur Verlängerung der Zeitspanne erhält, die Steuereinheit (42) die bestimmte Zeitspanne verlängert.

## Revendications

1. (En cours de modification) Unité extérieure (1), comprenant :
une unité de communication (20) qui est configurée pour réaliser une communication de données sans contact avec un terminal d'information (100) proche de l'unité extérieure (1) ; et
un organe de commande (42) qui permet de régler des données à partir du terminal d'information (100) via l'unité de communication (20) uniquement pendant une certaine période après la mise en circuit de l'unité extérieure (1),
**caractérisée en ce que** l'unité de communication (20) fonctionne avec de l'électricité produite par induction électromagnétique due à une onde radio émise à partir du terminal d'information (100), et est configurée pour réaliser une communication de données sans contact par une technologie de communication en champ proche avec le terminal d'information (110).

2. (En cours de modification) Unité extérieure (1) selon la revendication 1, **caractérisée en ce qu'**elle comprend également :
un échangeur de chaleur extérieur (10) ; et
un boîtier (2) qui loge l'échangeur de chaleur extérieur (10) et comprend une plaque frontale (4) qui inclut une ouverture de ventilation (4a) destinée à fournir de l'air extérieur à l'échangeur de chaleur extérieur (10), dans laquelle
l'unité de communication (20) est disposée dans une position correspondant à l'ouverture de ventilation (4a) dans l'échangeur de chaleur extérieur (10).

3. (En cours de modification) Unité extérieure (1) selon la revendication 1, **caractérisée en ce que**
l'organe de commande (42) est configuré pour recevoir une entrée de données à partir du terminal d'information (100) via l'unité de communication (20) pendant la certaine période après la mise en circuit de l'unité extérieure (1), et
quand les données reçues sont des données en lien avec le fonctionnement de l'échangeur de chaleur extérieur (10), l'organe de commande (42) règle les données en tant que données de fonctionnement de l'unité extérieure (1).

4. (En cours de modification) Unité extérieure (1) selon la revendication 3, **caractérisée en ce que**
quand les données reçues sont une instruction pour un diagnostic de l'unité extérieure (1), l'organe de commande (42) est configuré pour diagnostiquer un état de l'unité extérieure (1) et notifie au terminal d'information (100) un diagnostic via l'unité de communication (20).

5. (En cours de modification) Unité extérieure (1) selon la revendication 1, **caractérisée en ce que**
à l'approche d'une fin de la certaine période, l'organe de commande (42) est configuré pour notifier au terminal d'information (100), via l'unité de communication (20), que la fin de la certaine période approche, et
quand, en réponse à la notification, l'organe de commande (42) reçoit de la part du terminal d'information (100) via l'unité de communication (20) une instruction de prolonger la période, l'organe de commande (42) prolonge la certaine période.
